# EUROPEAN PATENT SPECIFICATION

(11) **EP 1 162 092 B1**
(45) Date of publication and mention of the grant of the patent: **12.12.2007**
(21) Application number: 01112691.9
(22) Date of filing: 25.05.2001
(51) Int. Cl.: B60G 17/015, B60G 17/005, B60G 9/02, B66F 9/075

(54) **Vehicle suspension with an axle having two steering wheels, particularly for four-wheel lift trucks**
Fahrzeugaufhängung mit zwei lenkbare Räder tragender Achse, insbesondere für Vierrad-Gabelstapler
Suspension de véhicule comprenant un essieu à deux roues directrices, en particulier pour chariots élévateurs à quatre roues

(30) Priority: 06.06.2000 IT BO000336
(43) Date of publication of application: 12.12.2001
(73) Proprietor: Montini & C. S.n.c., 48010 Cotignola, Province of Ravenna (IT)
(72) Inventor: Garotti, Francesco, 48010 Cotignola, Province of Ravenna (IT); Ravaglia, Paolo, Province of Ravenna (IT)
(74) Representative: Porsia, Dino

(56) References cited:
- FR-A- 2 600 595
- US-A- 4 418 932

## Description

In the lift trucks of known type, all the wheels are mounted on suspensions which are not dampened and the distance from the ground of the ballasted base of the said trucks is usually fixed. These conditions render the driving of the truck not comfortable, particularly upon travelling along irregular surfaces. The fixed distance from the ground of the bottom of a truck of known type, particularly of the three-wheel type, is then such that if the truck exceeds a predetermined speed, said truck can be overturned laterally if it is subjected to a strong thrust which is orthogonal to the direction of travel. In order to avoid these inconveniences, the applicant has invented for the rear steering wheel of a three-wheel lift truck a shock-absorbing suspension with variable inclination, covered by European application EP 1 022 166, or US application US 44 18932 according to which the single or twin wheel for steering the truck is mounted on a swinging arm, controlled a hydraulic cylinder connected to a hydropneumatic accumulator and to a hydraulic controller, with the interposition of solenoid valves controlled by an electronic controller which receives from an encoder an electric signal proportional to the travelling speed of the truck and which receives from a transducer an electric signal proportional to the angular position of the said swinging arm. By these means whenever the truck travels at normal speed or very slowly, the suspension is prearranged so that the truck assumes a position lifted and almost horizontal, i. e. with the maximum distance of the wheels from the truck itself, and in the first case the suspension can be dampened by the hydropneumatic accumulator, while in the second case, or even when the truck is stopped, the suspension becomes rigid, due to the maximum extension of the said hydraulic cylinder in order to ensure to the said truck manoeuvering stability during the phases of loading and unloading of the palletized loads. Whenever instead the truck exceeds a predetermined maximum speed, the suspension is automatically arranged so that the truck takes a lowered position, with a minimum distance of same from the steering wheels in order to reduce the dangers of side overturning of the truck itself.

The invention is concerned with the application of said idea of solution, principally the scope of shock-absorbing and of comfort, on a two-steering wheel truck, for which it has been necessary to design a new suspension. The characteristic features of this suspension and the advantages deriving therefrom, will appear evident from the following description of a preferred embodiment of same, illustrated merely by way of non-limiting example, in the Figures of the attached sheets of drawings, in which:
Figures 1 and 2 are diagrammatic views, respectively in plan view from the top and in side elevation, of a known axle provided with two steering wheels;
Figures 3 and 4 are side and diagrammatic views of a suspension with an axle as from Figures 1 and 2, which has been rendered swinging and dampened in accordance with the teachings of the known art;
Figures 5 and 6 are perspective views of the new shock-absorbing suspension according to the invention, taken during successive moments of its constructional cycle;
Figures 7 and 8 are side views of the new suspension respectively in extended and retracted position;
Figures 9, 9a and 9b are diagrammatic side views of different realisations of the suspension taken in the extreme positions such as those in Figures 7 and 8;
Figure 10 shows the suspension in plan view from the bottom;
Figure 11 is a diagrammatic side view of the suspension in the positions according to Figures 7 and 8, taken with the wheels in straight position and steered of 90°.

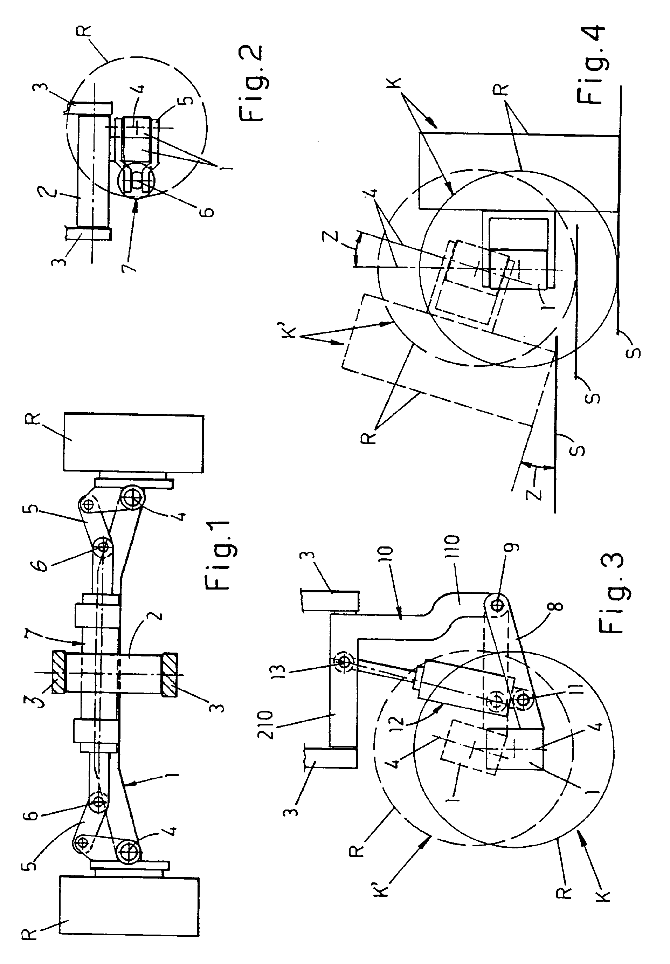

In order to understand the problems which underlie the invention, the attention is drawn to Figures 1 and 2, which show a two-wheel steering axle, of the type presently mounted on four-wheel lift trucks. The suspension includes an axle 1 on which there is secured in the centre line a transverse bushing 2 rotatably secured to end supports 3 fixed to the frame of the truck, in such a manner that the said axle can, if required, swing about the longitudinal axis of the truck itself and therefore transversely with respect to the said truck, with amplitudes controlled by limiting devices and by shock-absorbers, if required, all not shown. The ends of axle 1 rotatably support the vertical steering axes 4, integral with the assemblies carrying the spindles of the wheels R, on their turn connected by means of connecting rods 5 to the ends of a hydraulic cylinder 7 with opposed stems, which is integral by its body to said axle 1 and connected to the hydraulic controller of the truck.

If it is desired to apply to the axle according to Figures 1 and 2, the teachings described in the patent application cited in the introduction of the present application, it should be necessary to realise a suspension as diagrammatically shown in Figure 3. To the intermediate portion of the axle 1 there should be transversely secured an arm 8 fulcrumed at 9 by its other end to the lower end of the downwardly directed portion of a support 10 having the shape of an upturned "L", which by the opposed ends of the upper portion 210 should be rotatably connected to the supports 3 according to figures 1 and 2, in such a manner that the axle 1 may swing transversely to the truck, as requested by the known art. To the intermediate portion of arm 8 there should be hinged at 11 one end of a hydraulic cylinder 12 articulated by its stem at 13 to the upper portion 210 of support 10. The cylinder 12, which is of the plunger type, should be connected to the hydropneumatic accumulator and to all those means described in the aforementioned patent application, in order to dampen the swinging movements of the arm 8 with the axle 1 and to consent to the suspension to shift from the extension end position indicated by K and with continuous line in Figures 3 and 4, to the retraction end position indicated by K' and with dash lines. If in the extended position K the steering axes 4 are for example vertical, in the retracted position K' the said axes 4 are inclined of an angle Z with respect to the vertical, as evidenced in Figure 4. If the axes 4 are vertical, during the steering operation the wheels R contact the ground S with the whole generatrix of their tread as evidenced for the high position K and the distance of the said axle from the ground does not change. If instead the steering axes 4 are not vertical, as shown in the position K', whenever the wheels R steer they are inclined transversally more and more, until after a steering of 90° the generatrix of their tread takes in its contact with the ground S, the same inclination Z of the axes 4. In the steering phase the wheels, therefore, touch the ground in an anomalous manner, and the axle 1 comes to be lowered at one end, and comes to be lifted at the other end, thus compromising the driving of the truck and the regularity of wear of the said wheels.

Purpose of the invention is the realization of a shock-absorbing suspension with variable inclination, particularly for the two steering wheels of a lift truck, which is of simple construction and of reduced dimension in order to be mounted in the limited spaces of the truck itself, which spaces would not allow the use of a four-bar linkage solution. The novel suspension does not present the inconveniences cited with reference to Figures 3 and 4, in such a manner upon variation of the angular position of the swinging arm that supports the axle, the steering axes 4 always remains in an almost vertical or perpendicular position to the roadway of the truck.

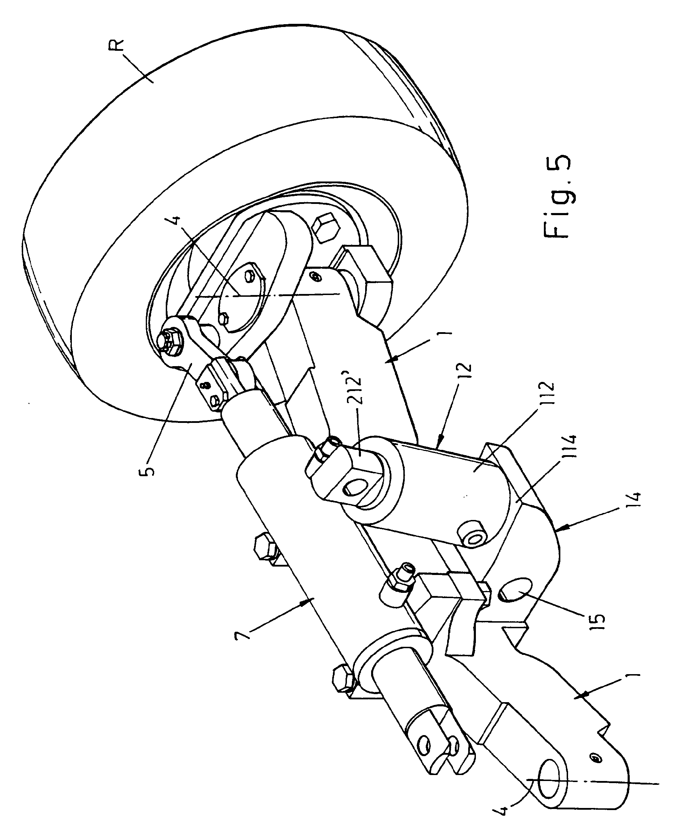

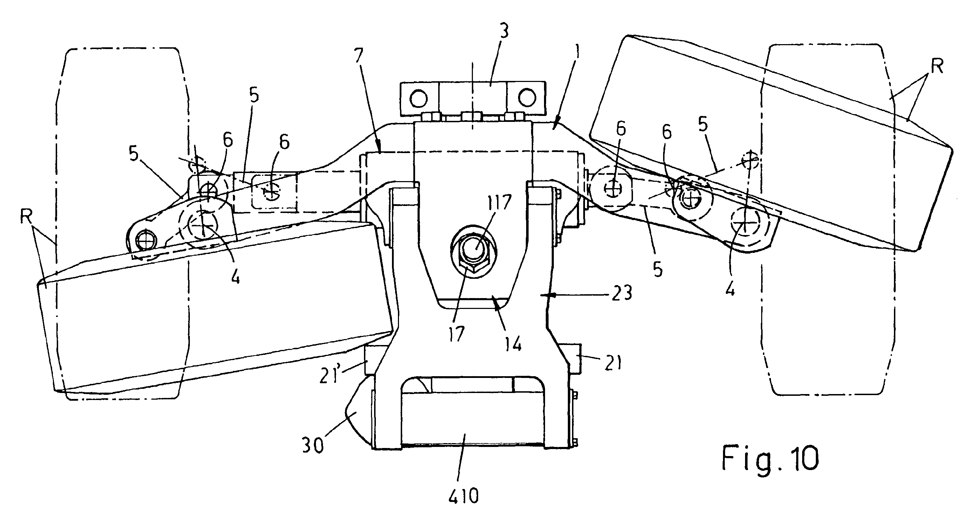

In order to attain this scope, the axle 1 (Figures 5, 6, 7, 10) is provided transversely and integrally in its centre line, with at least one appendix 14 for example almost horizontal, provided in its portion near to the axle with a transverse and through bore 15 and provided in its more projecting portion with a median bore which passes through said appendix from the bottom upwardly and which is engaged by a stud bolt 117, locked by a nut 17 and by reference pins which are not shown, and which is axially integral to the bottom of the body 112 of the hydraulic control cylinder 12 which is preferably of the plunger type and which is designed to resist to remarkable bending stresses. The upper face 114 of the appendix 14 forms an angle greater than 90° degrees with respect to the ideal plane which contains the steering axes 4 so that the cylinder 12 can optimise its function of shock-absorber at the moment in which the suspension in question overcomes an obstacle (see after). The stem 212 of cylinder 12 is hinged transversely at 18 to the upper portion 210 of a support 10 having the shape of an upturned "L", provided on the free end of the said portion 210 with an appendix 310 directed downwardly. Onto said appendix and on the opposed portion of the downwardly directed branch 110 of the support 10, there are mounted, rotatable about a common axis, the supports 3 provided for the fastening to the truck frame. For its hinging to the support 10, the stem of cylinder 12 terminates for example with a flat portion 212' which engages with clearance a slot 19 obtained longitudinally on the portion 210 of the support 10 and which is provided with a transverse bore passed through by a pin 18 which by means of its flattened end bored ends bears onto the machined lower face of the said portion 210 of support 10 and is fixed thereto by means of screws 20 which ensure the axial and radial locking of the said pin 18.

The downwardly directed portion 110 of the support 10 is provided laterally with upper and opposed appendices 21 and 21' which project out of the plan dimensions of the said part 210 in order to co-operate with adjustable abutments arranged on the frame of the truck and not shown, which limit the transverse swinging movements or oscillations of the suspension. The same downwardly directed portion 110 of the support 10 terminates at its bottom with a transverse bushing 410 which gives to the said portion 110 the shape of an upturned "T".

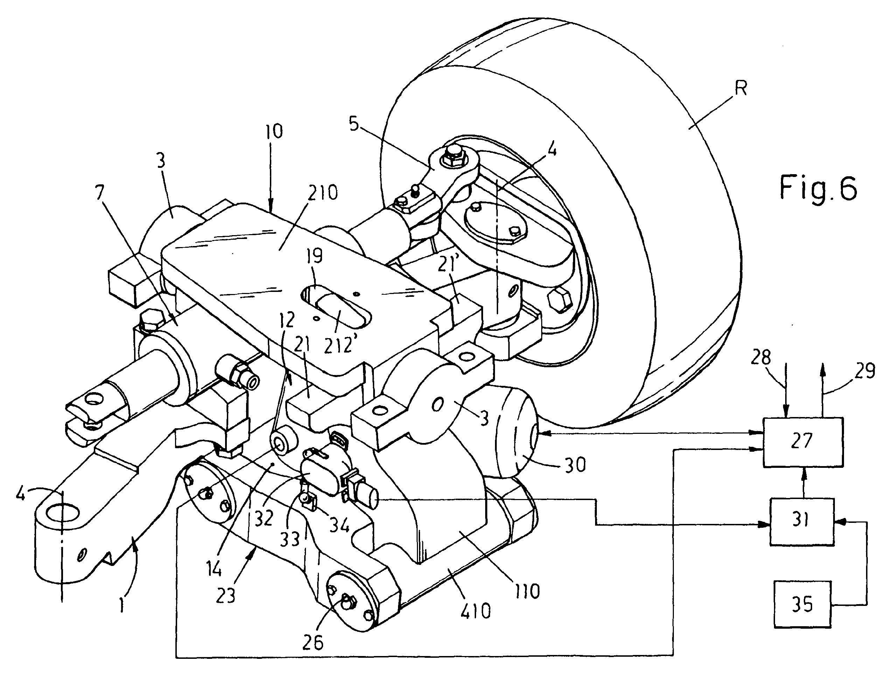

To the bores 22 of the bushing 410 and the bores 15 of the appendix 14 there are hinged the forked ends of a strong lever 23 having the shape of an H. When the alignment of the ends of lever 23 with the bores 22, 15 has been effected, inside said bores there are inserted the pins 24 and 25 which by their ends project out of said bores in order to co-operate with the bearings or others means mounted in the end seats of said lever 23 (Figure 6). By the reference numeral 26 there are indicated lubricators for lubricating the said bearings.

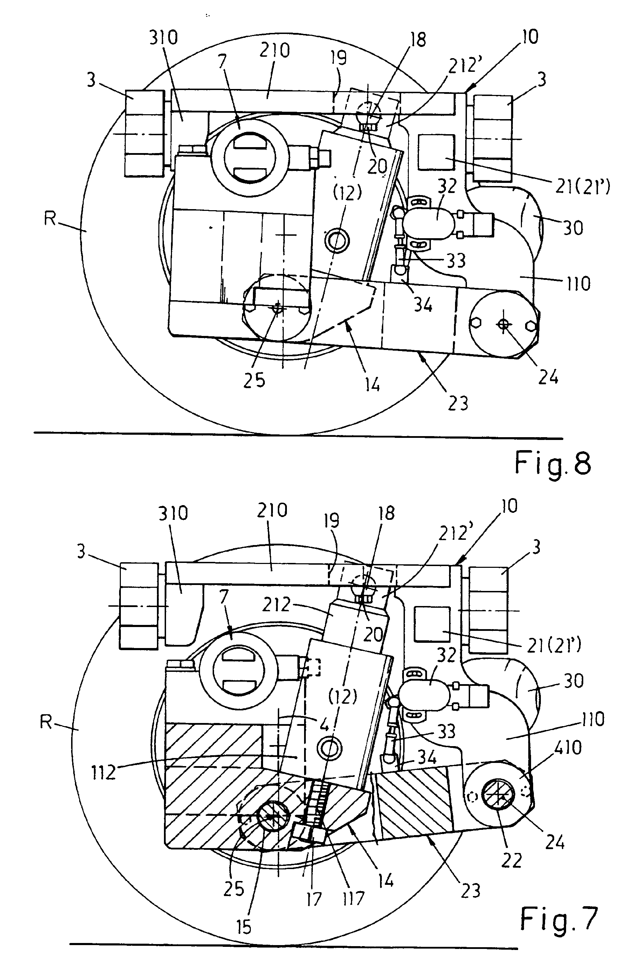

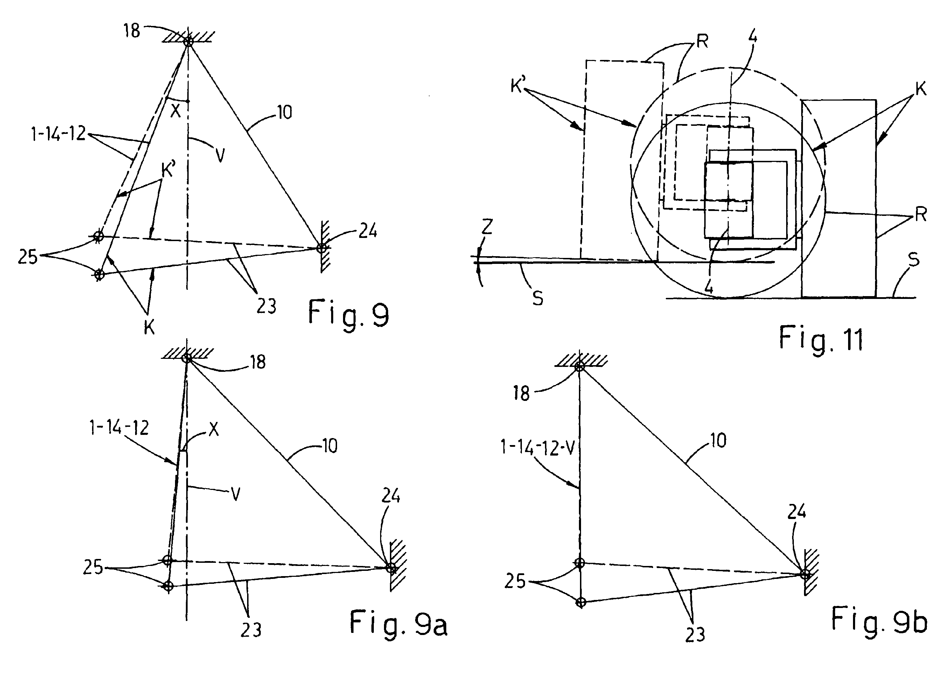

From Figures 7, 8 and 9 it appears evident that the suspension in question realizes an articulated triangle a side of which is constituted by the support 10 which we suppose to be a fixed side for the connection to the truck frame. The second side of the articulated triangle is constituted by the swinging lower lever 23 hinged at 24 to the lower end of the said fixed side 10. The third side is constituted by the assembly of the axle 1, of the appendix 14 and the by the cylinder 12 which confers to said side features of variable length upon variation of the angular position of said second side 23. This third side is hinged at the bottom to the said second side at 25 and it is hinged at 18 to the fixed side 10. Whenever the cylinder12 is expanded, the second swinging side 23 of the articulated triangle is inclined towards the bottom and forms, for example, an angle of about 6,5-7° with respect to the horizontal (see portion of Figure 9 indicated with continuous line). Whenever the cylinder 12 is retracted, the second swinging side 23 oscillates upwardly, passes through the horizontal position and comes to rest with a disposition inclined upwardly, for example so as to form an angle of about 3-4° with the respect to the horizontal (see portion of Figure 9 indicated by dashed lines). Figure 9 evidences how the angle X which the third variable length side 1, 12, 14 forms with respect to the vertical V, changes of a very small amount when the second swinging side passes from the bottom position to the top position and vice versa. This minimum variation of the angle X involves evidently a minimum variation of the angle which the steering axes 4 of the axle 1 form with respect to the vertical in passing from the position K of lower axle to the position K' of upper axle as indicated by Figure 11. From this figure it appears that whenever the axle is high the wheels R steered by 90° form with the generatrix of their tread a very small angle Z with respect to the ground S, with a substantial elimination of the problems cited with reference to the Figures 3 and 4 of the known prior art.

Figure 9a evidences how, the more the hinge point 25 is next to the vertical ideal plane V which contains the upper hinge point 18 of the variable length side 1, 14, 21, to the fixed side 10, the lesser is the variation of the angle X which the said side of variable length forms with the vertical V when the swinging and fixed length side 23 passes from the bottom to the top position and vice versa. Figure 9b shows the theoretical optimal condition in which the variable length side 1, 14, 12 lies on the vertical plane V, with consequent annulment of the angle X and of the variation of said angle.

The design situation shown in Figures 7 and 8 is therefore a compromise which starting from the limitation imposed by the reduced dimensions which are available in a two-steering-wheel lift truck, tends as much as possible to reach the optimal condition illustrated in Figures 9 and 9b.

The shock absorber suspension according to the invention can be controlled by the same means described in the patent application cited in the introductory portion and diagrammatically shown in Figure 6. The cylinder 12 is connected to the hydraulic controller 27 connected at 28 to the hydraulic service pump of the truck and connected at 29 to the discharge. To the said hydraulic controller 27 there is connected the hydropneumatic accumulator 30 mounted, for example, on one side of the descending portion 110 of the support 10, the nearest possible to the cylinder 12, in order to dampen the operation of said cylinder when the suspension is in the extended and dampened condition. A choke throttle can be provided in the connection between the accumulator 30 and the cylinder 12 in order to adjust the dampening action of the accumulator itself. The hydraulic controller 27 is controlled by the electronic controller 31 which receives the informations relating to the angular position of the swinging side 23, by means of the transducer 32 mounted for example on one side of the portion 110 of the support 10 and connected with its moving element, through a tie rod 33, to an appendix 34 of the lower swinging side 23 of the suspension. The electronic controller 31 can be connected to the encoder 35 associated with the engine of the truck, in order to modify, if required, in an automatic manner, the position of the suspension in relation with the speed of running and/or with the load conditions of the said truck. The four-wheel truck provided with the described suspension can proceed at normal or slow speed with the suspension in the extended condition, which in the first case can be dampened by the accumulator 30 and in the second case it can become rigid in order to ensure to the truck the maximum stability in the operations of taking over and of discharge of the palletized loads. Whenever instead the truck exceeds a maximum predetermined speed, the suspension can assume automatically the contracted position so as to increase the margins of stability of the truck itself. Upon variation of the load applied to the forks of the truck, the electronic controller 31 will provide to maintain the truck always in almost horizontal position.

## Claims

1. A suspension for automotive vehicles provided with two steering wheels, particularly for the swinging rear axle of four-wheel lift trucks, **characterised by** the fact that the axle (1) is provided transversely and integrally with at least an appendix (14) directed along the longitudinal axis of the truck and connected by means of a hinge (25) parallel to the axle, to the end of at least a lever (23) which by its other end is connected by means of a hinge (24) parallel to the preceding one, to the bottom end of the descending portion (110) of a support (10) having the shape of an inverted "L", having its upper portion (210) arranged orthogonally with respect to the axle and hinged to the frame of the truck so as to consent to the axle to swing transversely with respect to the longitudinal axis of the truck itself, there being connected to the said upper portion (210) of the support (10), by means of a transverse hinge (18), one end of a hydraulic cylinder (12) having its other end firmly secured to the said median appendix (14) of the axle, and said cylinder being connected to an hydraulic controller (27) provided with hydropneumatic accumulator (30) and to suitable means such that the said swinging lever (23) can perform a dampened swinging movement having such a useful amplitude that the steering axes, (4) arranged at the ends of the axle, are maintained substantially on a plane perpendicular to the roadway of the truck.

2. A suspension according to claim 1, in which the hydraulic cylinder (12) is of the plunger type and presents a high resistance to bending stresses.

3. A suspension according to claim 1, in which the hydraulic cylinder (12) carries integrally and coaxially on the base of its body (112) a stud bolt (117) which passes through a through bore obtained in the median appendix (14) of the axle, which is preferably fixed in said bore by means of reference pins and of at least one nut (17).

4. A suspension according to claim 1, in which the stem (212) of the cylinder (12) terminates with a flat portion (212') which engages with clearance a slot (19) obtained longitudinally and in the median zone of the upper portion (210) of the support (10) mounted on the truck frame with possibility of transverse swinging, the said flat end of the stem being provided with a transverse bore engaged by at least one pin (18) which by its flattened and bored ends bears underneath the said upper portion (210) of the swinging support (10) and it is thereto fixed by means of screws (20).

5. A suspension according to claim 1, in which the lower swinging lever (23) is shaped like an "H", so as to present both ends with a forked shape in order to engage at one side the median appendix (14) of the axle and at the other side the lower end of the descending portion (110) of the support (10) secured to the truck frame with possibility of transverse swinging.

6. A suspension according to claim 5, in which the forked ends of the lower swinging lever (23) are provided with seats for housing bearings or equivalent means which co-operate with the projecting ends of pins (24, 25) inserted in transverse bores (15, 22) of the median appendix (14) of the axle and of the lower end of the descending portion (110) of the support (10) mounted onto the truck frame with possibility of transverse swinging.

7. A suspension according to claim 1, in which the support (10) shaped as a "L" mounted on the truck frame with possibility of transverse swinging is provided with an upper flat portion (210) having an end appendix (310) directed downwardly and the lower end of the descending portion (110) of said support is provided with a transverse bushing (410) which confers to same an upturned "T" shape and to which there is hinged one end of the lower swinging lever (23) of the suspension, onto said appendix (310) and onto the top portion of the said descending portion (110) there being associated the supports (3) rotatable about the longitudinal axis of the said upper portion (210), said supports being arranged for the fastening to the truck frame and the said descending portion (110) being provided laterally and in its top portion with appendices (21, 21') opposed and projecting for the co-operation with registers fixed to the truck frame, in order to limit the transverse swinging of the said support (10).

8. A suspension according to claim 7, in which the descending portion (110) of the support (10) mounted on the truck support with possibility of transverse swinging, has a side profile like an "S".

9. A suspension according to claim 1, in which the portions which constitute the said suspension are such that the lower swinging lever (23) passes from an end position in which it is inclined downwardly with respect to the horizontal, corresponding to the condition of maximum extension of the hydraulic cylinder (12) to an end position in which the said swinging lever (23) is inclined upwardly with respect to the horizontal, concurrently with the maximum retraction of said cylinder (12).

10. A suspension according to claim 9, in which the hinge axis (25) of the lower swinging lever (23) to the median appendix (14) of the axle (1), as far as consented by the limitations which derive from the reduced dimensions which are available in a two-steering-wheel lift truck, tends to be as much as possible next to the ideal vertical plane on which there lies the hinge axis (18) connecting the stem of the hydraulic cylinder (12) to the support (10) mounted on the truck frame with possibility of transverse swinging.

11. A suspension according to claim 1, in which on one side of the descending portion (110) of the support (10) there is mounted an transducer (32) which supplies an electric signal proportional to the angular distance between said part of support (10) and the lower swinging lever (23), to an appendix (34) of which there is connected the mobile element of the said transducer by means of a tie rod (33), on the opposed side of the said descending portion (110) of the said support (10) there being secured the hydropneumatic accumulator (30) which dampens the operation of the hydraulic cylinder (12) of the said suspension.

12. A suspension according to claim 11, in which the hydraulic cylinder (12) and the hydropneumatic accumulator (30) are connected to an hydraulic controller (27) served by the hydraulic pump of the lift truck and controlled by the transducer (32) of the angular position of the lower swinging lever (23), as well as by the encoder (35) which detects the speed of the truck, the whole in such a manner that the truck itself can proceed at normal or slow speed with the extended suspension, which in the first case can be dampened by the accumulator (30), while in the second case it becomes rigid to ensure to the truck the maximum stability in the operations of loading and of unloading of the palletized loads, there being instead provided that if the truck travels at a speed exceeding a maximum predetermined value, the suspension can be if required automatically contracted to lower the truck in order to increase its stability.

13. A suspension according to claim 1, **characterised by** the fact of being provided with self-levelling functions, in order to maintain the lift truck always in almost horizontal position upon variation of the load applied to the forks.

## Patentansprüche

1. Aufhängung für Automobile, die mit zwei lenkbaren Rädern vorgesehen ist, insbesondere für die schwenkbare Hinterachse von Vierrad-Gabelstaplern, **dadurch gekennzeichnet, dass** die Achse (1) diagonal und integral mit zumindest einem Ansatz (14) vorgesehen ist, der entlang der Längsachse des Staplers ausgerichtet ist, und durch ein Gelenk (25) parallel zu der Achse mit dem Ende zumindest eines Hebels (23) verbunden ist, der über sein anderes Ende durch ein Gelenk (24) parallel zu dem vorgenannten mit dem unteren Ende des abfallenden Abschnitts (110) der Stütze (10) mit der Form eines invertierten L's verbunden ist, wobei sein oberer Abschnitt (210) orthogonal mit Bezug zu der Achse angeordnet und mit dem Rahmen des Staplers gelenkig verbunden ist, um mit der Achse überein zu stimmen, um diagonal mit Bezug auf die Längsachse des Staplers zu schwenken, wobei mit dem oberen Abschnitt (210) der Stütze (10) durch ein diagonales Gelenk (18), ein Ende eines hydraulischen Zylinders (12) verbunden ist, der mit seinem anderen Ende fest an dem mittleren Ansatz (14) der Achse befestigt ist, und wobei der Zylinder mit einem hydraulischen Regler (27) verbunden ist, der mit einem hydropneumatischen Akkumulator (30) vorgesehen ist, und mit geeigneten Mitteln, so dass der Schwenkhebel (23) eine gedämpfte Schwenkbewegung durchführen kann, mit einer derart nützlichen Amplitude, dass die Lenkachsen (4), die an den Enden der Achse angeordnet sind, im wesentlichen in einer Ebene rechtwinklig zur Fahrbahn des Staplers gehalten werden.

2. Aufhängung nach Anspruch 1, wobei der Hydraulikzylinder (12) vom Plungerkolben-Typ ist und hohen Widerstand gegen Biegespannungen aufweist.

3. Aufhängung nach Anspruch 1, wobei der Hydraulikzylinder (12) integral und koaxial an der Basis seines Körpers (112) einen Stehbolzen (117) trägt, der durch eine Durchgangsbohrung, die in dem mittleren Ansatz (14) der Achse enthalten ist, hindurchgeht, und der vorzugsweise in dieser Bohrung durch Referenzstifte und zumindest eine Mutter (17) befestigt ist.

4. Aufhängung nach Anspruch 1, wobei der Stiel (212) des Zylinders (12) in einem flachen Abschnitt (212') endet, der mit Spiel in einen Schlitz (19) eingreift, der längs und in der mittleren Zone des oberen Abschnitts (210) der Stütze (10) enthalten ist, die an dem Staplerrahmen mit der Möglichkeit zum diagonalen Schwenken montiert ist, wobei das flache Ende des Stiels mit einer diagonalen Bohrung vorgesehen ist, in die zumindest ein Stift (18) eingreift, der durch seine abgeflachten und gebohrten Enden unter dem oberen Abschnitt (210) der Schwenkstütze (10) trägt und daran durch Schrauben (20) befestigt ist.

5. Aufhängung nach Anspruch 1, wobei der untere Schwenkhebel (23) H-förmig ausgestaltet ist, sodass beide Enden gabelförmig ausgeschaltet sind, um an einer Seite am mittleren Ansatz (14) der Achse und an der anderen Seite am untere Ende des abfallenden Abschnitts (110) der Stütze (10) einzugreifen, die an dem Staplerrahmen mit der Möglichkeit zum diagonalen Schwenken befestigt ist.

6. Aufhängung nach Anspruch 5, wobei die Gabelenden des unteren Schwenkhebels (23) mit Sitzen zum Aufnehmen der Lager oder ähnlicher Einrichtungen vorgesehen sind, die mit den vorstehenden Enden von Stiften (24, 25) zusammenwirken, die in diagonale Bohrungen (15, 22) des mittleren Ansatzes (14) der Achse und des unteren Endes des abfallenden Abschnitts (110) der Stütze (10) eingeführt sind, die an dem Staplerrahmen mit der Möglichkeit zum diagonalen Schwenken montiert ist.

7. Aufhängung nach Anspruch 1, wobei die an dem Staplerrahmen montierte L-förmige Stütze (10) mit der Möglichkeit zum diagonalen Schwenken mit einem oberen flachen Abschnitt (210) vorgesehen ist, der einen End-Ansatz (310) aufweist, der nach unten weist und wobei das untere Ende des abfallenden Abschnitts (110) der Stütze mit einer diagonalen Hülse (410) vorgesehen ist, die diesem die Form eines aufgestellten T's verleiht, und an die ein Ende des unteren Schwenkhebels (23) der Aufhängung gehängt ist, wobei an den Ansatz (310) und an den oberen Abschnitt des abfallenden Abschnitts (110) die Stützten (3) drehbar um die Längsachse des oberen Abschnitts (210) zugeordnet sind, wobei die Stützen zum Befestigen an den Staplerrahmen und dem abfallenden Abschnitt (110) angeordnet sind und seitlich und in dem oberen Abschnitt mit Ansätzen (21, 21') gegenüberliegend und hervorstehend zum Zusammenwirken mit Schiebern vorgesehen sind, die am Staplerrahmen befestigt sind, um das diagonale Schwenken der Stütze (10) zu begrenzen.

8. Aufhängung nach Anspruch 7, wobei der abfallende Abschnitt (110) der Stütze (10), die an der Staplerstütze mit der Möglichkeit zum diagonalen Schwenken montiert ist, ein S-förmiges Seitenprofil aufweist.

9. Aufhängung nach Anspruch 1, wobei die Abschnitte, welche die Aufhängung bilden, derart ausgestaltet sind, dass der untere Schwenkhebel (23) von einer Endposition, in der er nach unten mit Bezug auf die Horizontale geneigt ist, verläuft, korrespondierend mit der Bedingung maximaler Erstreckung des Hydraulikzylinders (12) in eine Endposition, einer in welcher der Schwenkhebel (23) nach oben geneigt ist, mit Bezug auf die Horizontale, konkurrierend mit der maximalen Retraktion des Zylinders (12).

10. Aufhängung nach Anspruch 9, wobei die Gelenkachse (25) des unteren Schwenkhebels (23) zu dem mittleren Ansatz (14) der Achse (1) dazu neigt, soweit sie mit den Begrenzungen übereinstimmt, die von den reduzierten Dimensionen herstammen, die in einem Gabelstapler mit zwei gelenkten Rädern herrühren, so weit wie möglich in der Nähe der idealen vertikalen Ebene zu sein, in der die Gelenkachse (18) liegt, welche den Stiel des hydraulischen Zylinders (12) mit der Stütze (10) verbindet, die an dem Staplerrahmen mit der Möglichkeit zum diagonalen Schwenken montiert ist.

11. Aufhängung nach Anspruch 1, wobei an einer Seite des abfallenden Abschnitts (110) der Stütze (10) ein Transducer (32), der ein elektrisches Signal proportional zu der Winkeldistanz zwischen dem Teil der Stütze (10) und dem unteren Schwenkhebel (23) zur Verfügung stellt, an einen Ansatz (34) montiert ist, mit dem das mobile Element des Transducers durch eine Zugstange (33) verbunden ist, wobei an der gegenüberliegenden Seite dieses abfallenden Abschnitts (110) der Stütze (10) der hydropneumatische Akkumulator (30) befestigt ist, der den Betrieb des hydraulischen Zylinders (12) der Aufhängung dämpft.

12. Aufhängung nach Anspruch 11, wobei der hydraulische Zylinder (12) und der hydropneumatische Akkumulator (30) mit einem Hydraulikregler (27) verbunden sind, der von der Hydraulikpumpe des Gabelstaplers versorgt wird und von dem Transducer (32) der Winkelposition des unteren Schwenkhebels (23) geregelt wird, als auch von der Codiereinrichtung (35), welche die Geschwindigkeit des Staplers erfasst, alles in der Weise, dass der Stapler bei normaler oder langsamer Geschwindigkeit mit ausgefahrener Aufhängung fährt, die im ersten Falle durch den Akkumulator (30) gedämpft sein kann, während sie in dem zweiten Fall steif wird, um sicherzustellen, dass der Stapler die maximale Stabilität im Betrieb des Ladens und Entladens von palletierten Lasten aufweist, wobei andernfalls vorgesehen ist, dass falls der Stapler sich bei einer Geschwindigkeit bewegt, die eine vorbestimmte Maximalgeschwindigkeit überschreitet, die Aufhängung automatisch, falls erforderlich, zusammengezogen werden kann, um den Stapler tiefer zu legen, um seine Stabilität zu erhöhen.

13. Aufhängung nach Anspruch 1, **dadurch gekennzeichnet, dass** sie mit einer Selbstnivellierungsfunktion ausgestattet ist, um den Gabelstapler bei Variation der auf die Gabeln wirkenden Last immer in fast horizontaler Position zu halten.

## Revendications

1. Suspension pour véhicules automobiles équipés de deux roues directrices, en particulier pour l'essieu arrière oscillant de chariots élévateurs à quatre roues, **caractérisée par le fait que** l'essieu (1) est prévu transversalement et d'un seul tenant avec au moins un appendice (14) dirigé le long de l'axe longitudinal du chariot et relié au moyen d'une charnière (25) parallèle à l'essieu à l'extrémité d'au moins un levier (23) qui est relié par son autre extrémité et au moyen d'une charnière (24) parallèle à la précédente, à l'extrémité basse de la partie descendante (110) d'un support (10) ayant la forme d'un "L" inversé, dont la partie supérieure (210) est agencée orthogonalement par rapport à l'axe et articulée au châssis du chariot de manière à permettre à l'essieu d'osciller transversalement par rapport à l'axe longitudinal du chariot, cependant qu'à ladite partie supérieure (210) du support (10) est reliée, au moyen d'une charnière transversale (18), une extrémité d'un cylindre hydraulique (12) dont l'autre extrémité est fixée rigidement audit appendice médian (14) de l'essieu, et que ledit cylindre est relié à un dispositif de commande hydraulique (27) équipé d'un accumulateur hydropneumatique (30), et à des moyens appropriés qui sont tels que ledit levier oscillant (23) puisse décrire un mouvement d'oscillation amorti ayant une amplitude utile telle que les pivots (4) agencés aux extrémités de l'essieu soient maintenus sensiblement dans un plan perpendiculaire à la voie de roulement du chariot.

2. Suspension selon la revendication 1, dans laquelle le cylindre hydraulique (12) est du type à plongeur et présente une haute résistance aux contraintes de flexion.

3. Suspension selon la revendication 1, dans laquelle le cylindre hydraulique (12) porte, en un seul tenant et coaxialement sur la base de son corps (112), un goujon (117) qui passe à travers un perçage traversant ménagé dans l'appendice médian (14) de l'essieu, et qui est de préférence fixé dans ledit perçage au moyen de broches de références et d'au moins un écrou (17).

4. Suspension selon la revendication 1, dans laquelle la tige (212) du cylindre (12) se termine par une partie plate (212') qui est en prise avec jeu avec une fente (19) ménagée longitudinalement dans la zone médiane de la partie supérieure (210) du support (10) monté sur le châssis du chariot avec possibilité d'oscillation transversale, ladite extrémité plate de la tige étant munie d'un perçage transversal attaqué par au moins une broche (18) qui porte, par ses extrémités aplaties et percées, au-dessous de ladite partie supérieure (210) du support oscillant (10) et y est fixée au moyen de vis (20).

5. Suspension selon la revendication 1, dans laquelle le levier oscillant inférieur (23) est en forme de "H" de manière à présenter ses deux extrémités dans une forme en fourche afin d'attaquer, d'un côté l'appendice médian (14) de l'essieu et, de l'autre côté, l'extrémité inférieure de la partie descendante (110) du support (10) fixé au châssis du chariot avec possibilité d'oscillation transversale.

6. Suspension selon la revendication 5, dans laquelle les extrémités en forme de fourche du levier oscillant inférieur (23) sont munies de portées pour loger des paliers ou moyens équivalents qui coopèrent avec les extrémités saillantes de broches (24, 25) insérées dans des perçages transversaux (15, 22) de l'appendice médian (14) de l'essieu et de l'extrémité inférieure de la partie descendante (110) du support (10) monté sur le châssis du chariot avec possibilité d'oscillation transversale.

7. Suspension selon la revendication 1, dans laquelle le support (10) en forme de "L" monté sur le châssis du chariot avec possibilité d'oscillation transversale est muni d'une partie supérieure plate (210) ayant un appendice terminal (310) dirigé vers le bas, et l'extrémité inférieure de la partie descendante (110) dudit support est munie d'une douille transversale (410) qui lui confère une forme de "T" renversé et à laquelle est articulée à charnière une extrémité du levier oscillant inférieur (23) de la suspension, cependant que, sur ledit appendice (310) et sur la partie haute de ladite partie descendante (110), sont montés les supports (3) pouvant tourner autour de l'axe longitudinal de ladite partie supérieure (210), lesdits supports étant agencés pour la fixation au châssis du chariot, et ladite partie descendante (110) étant munie, latéralement et sur sa partie haute, d'appendices (21, 21') opposés et en saillie destinés à coopérer avec des repères fixés au châssis du chariot afin de limiter l'oscillation transversale dudit support (10).

8. Suspension selon la revendication 7, dans laquelle la partie descendante (110) du support (10) monté sur le support du chariot avec possibilité d'oscillation transversale possède un profil latéral en forme de "S".

9. Suspension selon la revendication 1, dans laquelle les parties qui constituent ladite suspension sont telles que le levier oscillant inférieur (23) passe d'une position extrême dans laquelle il est incliné vers le bas par rapport à l'horizontale et qui correspond à l'état d'extension maximum du cylindre hydraulique (12), à une position extrême dans laquelle ledit levier oscillant(23) est incliné vers le haut par rapport à l'horizontale, concurremment avec le retrait maximum dudit cylindre (12).

10. Suspension selon la revendication 9, dans laquelle l'axe d'articulation à charnière (25) du levier oscillant inférieur (23) sur l'appendice médian (14) de l'essieu (1) tend, dans la mesure permise par les limitations qui dérivent des dimensions réduites qui sont disponibles dans un chariot élévateur à deux roues directrices, à être aussi proche que possible du plan vertical théorique dans lequel se trouve l'axe de charnière (18) qui relie la tige du cylindre hydraulique (12) au support (10) monté sur le châssis du chariot avec possibilité d'oscillation transversale.

11. Suspension selon la revendication 1, dans laquelle, sur un côté de la partie descendante (110) du support (10), est monté un transducteur (32) qui envoie un signal électrique proportionnel à la distance angulaire entre ladite partie du support (10) et le levier oscillant inférieur (23), à un appendice (34) auquel l'élément mobile dudit transducteur est relié au moyen d'une tige de liaison (33), tandis que, sur le côté opposé de ladite partie descendante (110) dudit support (10), est fixé l'accumulateur hydraulique (30) qui amortit le fonctionnement du cylindre hydraulique (12) de ladite suspension.

12. Suspension selon la revendication 11, dans laquelle le cylindre hydraulique (12) et l'accumulateur hydropneumatique (30) sont reliés à un dispositif de commande hydraulique (27) alimenté par la pompe hydraulique du chariot élévateur et commandé par le transducteur (32) de la position angulaire du levier oscillant inférieur (23) ainsi que par l'encodeur (35) qui détecte la vitesse du chariot, le tout d'une telle manière que le chariot puisse circuler à la vitesse normale ou à une vitesse lente avec la suspension en extension laquelle suspension, dans le premier cas, peut être amortie par l'accumulateur (30), tandis que, dans le deuxième cas, elle devient rigide pour assurer au chariot le maximum de stabilité dans les opérations de chargement et de déchargement des charges palettisées, cependant qu'il est au contraire prévu que, si le chariot circule à une vitesse supérieure à une valeur maximale prédéterminée, la suspension peut si nécessaire être contractée automatiquement pour abaisser le chariot afin d'accroître sa stabilité.

13. Suspension selon la revendication 1, **caractérisée en ce qu'**elle est équipée de fonctions d'autonivellement afin de maintenir le chariot élévateur en permanence dans une position presque horizontale à la suite d'une variation de la charge appliquée aux fourches.
